# EUROPÄISCHE PATENTSCHRIFT

(11) **EP 2 817 195 B1**
(45) Veröffentlichungstag und Bekanntmachung des Hinweises auf die Patenterteilung: **18.11.2015**
(21) Anmeldenummer: 13701909.7
(22) Anmeldetag: 18.01.2013
(51) Int. Cl.: B62D 1/19

(54) **LENKSÄULE FÜR EIN KRAFTFAHRZEUG MIT EINEM TRAGTEIL**
STEERING COLUMN FOR A MOTOR VEHICLE WITH A SUPPORT PART
COLONNE DE DIRECTION POUR VÉHICULE AUTOMOBILE COMPRENANT UNE PARTIE DE SUPPORT

(30) Priorität: 24.02.2012 DE 102012101494
(43) Veröffentlichungstag der Anmeldung: 31.12.2014
(73) Patentinhaber: ThyssenKrupp Presta Aktiengesellschaft, 9492 Eschen (LI)
(72) Erfinder: BACK, Rodrigo, 7323 Wangs (CH); GALEHR, Robert, LI-9493 Mauren (LI)
(74) Vertreter: ThyssenKrupp Intellectual Property GmbH
(86) Internationale Anmeldenummer: PCT/EP2013/000147
(87) Internationale Veröffentlichungsnummer: WO 2013/124024

(56) Entgegenhaltungen:
- EP-A2- 2 353 966
- GB-B- 2 411 156

## Beschreibung

Die vorliegende Erfindung betrifft eine Lenksäule für ein Kraftfahrzeug mit einem Tragteil zur direkten oder indirekten Befestigung der Lenksäule an einer Karosserie des Kraftfahrzeugs und mit zumindest einem, zumindest in einem Crashfall in einer Verschieberichtung verschiebbar am Tragteil gelagerten Schlitten, wobei eine Lenkspindel der Lenksäule direkt oder indirekt drehbar am Schlitten gelagert ist, und dass der Schlitten mittels zumindest einer Spannvorrichtung der Lenksäule auf das Tragteil gespannt ist, wobei der Schlitten zusätzlich noch an zumindest zwei, auf einander gegenüberliegenden Seiten der Spannvorrichtung und distanziert zur Spannvorrichtung angeordneten Anlagestellen am Tragteil abgestützt ist, wobei in Bereichen zwischen der Spannvorrichtung und den Anlagestellen jeweils zumindest ein Freiraum zwischen dem Schlitten und dem Tragteil angeordnet ist.

Lenksäulen für Kraftfahrzeuge sind z.B. aus der DE 101 45 896 A1, der US 5,503,431 A, der GB 2 411 156 B, der EP 0 479 455 B1 und der EP 1 939 064 A1 bekannt.

Die Verschiebbarkeit des Schlittens im Crashfall dient dazu, dass das Lenkrad samt Lenkspindel im Falle eines Unfalls, also im Crashfall, aus der Fahrgastzelle hinausgeschoben werden kann, um die Verletzungsgefahr des Fahrzeuglenkers oder zumindest die Schwere der Verletzungen des Fahrzeuglenkers herab zu setzen. Eine gattungsgemäße Lenksäule ist aus der EP 2 353 966 A2 bekannt. Aufgabe der Erfindung ist es, eine besonders einfach herstellbare vibrationsarme Lenksäule der oben genannten Art zur Verfügung zu stellen, bei welcher der Grad der Energieaufzehrung im Crashfall entlang des Verschiebewegs gezielt beeinflusst werden kann.

Dies gelingt durch eine Lenksäule gemäß des Patentanspruchs 1.

Es ist erfindungsgemäß somit vorgesehen, dass die Lenksäule zumindest eine, zwischen Schlitten und Tragteil oder zwischen Spannvorrichtung und Tragteil oder zwischen Spannvorrichtung und Schlitten angeordnete Keilfläche aufweist, wobei die Keilfläche entlang der Verschieberichtung ansteigt oder abfällt.

Mit Vorteil ist zur Erhöhung der Steifigkeit der Schlitten gegenüber dem Tragteil nur entlang der Verschieberichtung in seiner Lage veränderbar.

Das Tragteil kann bei der erfindungsgemäßen Lenksäule direkt an einer Karosserie eines Kraftfahrzeuges befestigbar sein. Es ist aber auch denkbar und möglich die Befestigung unter Zwischenschaltung eines anderen Teils, z.B. eines Halteteils zu ermöglichen. Dies ist besonders für den Fall von Lenksäulen, deren Position gegenüber dem Kraftfahrzeug einstellbar sein soll, von Vorteil.
Durch die, zwischen den Anlagestellen aber auch distanziert von den Anlagestellen angeordnete Spannvorrichtung ist es möglich, beim Spannen der Spannvorrichtung den Schlitten und gegebenenfalls auch das Tragteil in einem gewissen Umfang elastisch oder evtl. auch plastisch zu verformen. Der genannte Freiraum zwischen dem Schlitten und dem Tragteil im Bereich zwischen der Spannvorrichtung und den jeweiligen Anlagestellen lässt diese Art der Verformung zu. Hierdurch ist es möglich, die Spannung, mit der der Schlitten am Tragteil gehalten wird, relativ genau einzustellen, ohne dass hierfür besonders hohe Anforderungen an die Fertigungsgenauigkeit von Tragteil und Schlitten zu stellen sind. Durch dies ist es möglich, relativ große Toleranzen bei der Herstellung dieser Teile zuzulassen, wodurch eine einfache und kostengünstige Herstellung dieser Bauteile und damit der gesamten Lenksäule möglich ist.

Wichtig ist dabei somit, dass in den genannten Bereichen zwischen der Spannvorrichtung und der jeweiligen Anlagestelle ein Freiraum zwischen dem Schlitten und dem Tragteil angeordnet ist. Dies bedeutet, dass Schlitten und Tragteil in diesen Bereichen nicht aneinander anliegen und auch sonst nicht aufeinander abgestützt sind, sodass im Bereich dieser Freiräume eine gewisse Verformung des Schlittens und gegebenenfalls auch des Tragteils möglich ist.

Der Schlitten ist in bevorzugten Ausgestaltungsformen zumindest im Bereich der Spannvorrichtung bzw. im Bereich zwischen den Anlagestellen rohrförmig ausgebildet. Die Spannvorrichtung ist günstigerweise verstellbar. In anderen Worten ist die von der Spannvorrichtung aufgebrachte Spannkraft vorzugsweise einstellbar.

Bei der Lenkspindel handelt es sich um das Bauteil, mit welchem die vom Fahrzeuglenker mittels Drehen des Lenkrades aufgebrachte Lenkbewegung vom Lenkrad auf das Lenkgetriebe und damit in Richtung hin zu den Vorderrädern des Kraftfahrzeugs übertragen wird. Die Lenkspindel ist günstigerweise um ihre Längsachse drehbar direkt oder indirekt am Schlitten gelagert.

Das Tragteil kann mit entsprechenden Laschen an der Karosserie des Kraftfahrzeugs befestigt werden. Es handelt sich beim Tragteil also um das sogenannte karosseriefeste Bauteil der Lenksäule. Ob das Tragteil dabei direkt oder indirekt an der Karosserie befestigt ist, ist unerheblich. Wie jedoch eingangs bereits ausgeführt, kann das Tragteil auch unter Zwischenschaltung eines Halteteils an der Karosserie befestigt werden.

Mit dem Crashfall wird ein Unfall bezeichnet, bei dem das Kraftfahrzeug gegen ein anderes Kraftfahrzeug oder einen anderen Gegenstand prallt. In diesem Crashfall wird, sofern entsprechend große Kräfte auftreten, der Schlitten relativ zum Tragteil verschoben, womit die Lenkspindel samt daran befestigtem Lenkrad zumindest ein Stück weit aus der Fahrgastzelle in Richtung der Vorderräder geschoben wird, um eine Verletzung oder zumindest die Schwere der Verletzung des Kraftfahrzeuglenkers zu vermeiden bzw. zu minimieren. Diese Verschiebung des Schlittens relativ zum Tragteil im Crashfall dient in der Regel auch der gezielten Aufzehrung der beim Crash auftretenden Kräfte und Energien. Durch eine entsprechende Einstellung der von der Spannvorrichtung aufgebrachten Spannkräfte zwischen Tragteil und Schlitten und/oder Dimensionierung der Anordnung lässt sich der Grad der Energieaufzehrung bei dieser Relativbewegung einstellen. Weiter kann durch eine entsprechende Einstellung und/oder Dimensionierung eine Kraft vorgegeben werden, ab der die Verschiebung des Schlittens gegenüber dem Tragteil beginnen soll. Es können darüber hinaus, insbesondere auch zwischen Schlitten und Tragteil, noch weitere beim Stand der Technik an sich bekannte Mittel zur Energieaufzehrung wie z.B. Biege-, Reißbiege- oder reine Reißlaschen oder dergleichen vorgesehen sein.

Tragteil und Schlitten sind in der Regel aus Metall auszuführen. Es kann sich um Blechbiegeteile aus Stahl handeln. Insbesondere das Tragteil kann aber auch als Gussteil und damit besonders günstig herstellbar ausgeführt sein.

Bei erfindungsgemäßen Lenksäulen kann es sich um im Normalbetrieb starre bzw. nicht verstellbare Lenksäulen handeln, bei denen eine Verschiebung von Schlitten und Tragteil relativ zueinander nur im Crashfall vorgesehen ist. Es kann sich aber bei erfindungsgemäßen Lenksäulen auch um sogenannte verstellbare Lenksäulen handeln, die, wie an sich bekannt, eine Verstellung in Längsrichtung der Lenkspindel und/oder in Höhenrichtung zulassen um die Position des Lenkrades an den Fahrzeuglenker anzupassen. Dabei erfolgt die Verstellung in Höhenrichtung bevorzugt durch eine Verschwenkung des Tragteils samt Schlitten um eine Schwenkachse gegenüber der Karosserie des Kraftfahrzeuges. Die Schwenkachse kann hierzu in einem karosseriefesten Halteteil gelagert sein. Die Anlagestellen können in Verschieberichtung von der Spannvorrichtung distanziert sein. Besonders bevorzugte Ausgestaltungsformen der Erfindung sehen jedoch vor, dass die Anlagestellen in einer Richtung orthogonal zur Verschieberichtung von der Spannvorrichtung distanziert sind. Bevorzugte Varianten können vorsehen, dass die Anlagestellen in der Verschieberichtung längs erstreckt sind. Es ist auch möglich, dass die Anlagestellen in der Verschieberichtung distanziert voneinander und/oder hintereinander angeordnet sind. Die Richtung orthogonal zur Verschieberichtung liegt günstigerweise auch orthogonal zur Spannrichtung der Spannvorrichtung. Die Spannrichtung der Spannvorrichtung ist diejenige Richtung, mit der die Spannvorrichtung den Schlitten auf das Tragteil spannt. Bei rohrförmigen Schlitten oder zumindest bereichsweise rohrförmigen Schlitten sind die Anlagestellen günstigerweise in Umfangsrichtung des Schlittens von der Spannvorrichtung distanziert.

Die im Crashfall zur Energieaufzehrung von der erfindungsgemäßen Lenksäule aufgebrachten Gegenkräfte können über die entsprechenden Spannkräfte mittels der Spannvorrichtung eingestellt werden. Darüber hinaus ist vorgesehen, den Grad der Energieaufzehrung entlang des Verschiebeweges in Verschieberichtung zu verändern, indem man Tragteil und/oder Schlitten und/oder Spannvorrichtung mit einer entsprechenden Formgestaltung versieht. Es ist in diesem Sinne vorgesehen, dass die Lenksäule zumindest eine, zwischen Schlitten und Tragteil oder zwischen Spannvorrichtung und Tragteil oder zwischen Spannvorrichtung und Schlitten angeordnete Keilfläche aufweist, wobei die Keilfläche entlang der Verschieberichtung ansteigt oder abfällt. Über den Winkel der Keilfläche und den über den Verschiebeweg von der Keilfläche insgesamt zur Verfügung gestellten Hub wie auch den Verlauf der Keilfläche kann eine gezielte wegabhängige Energieabsorption im Crashfall dargestellt werden.

Besonders bevorzugte Ausgestaltungsformen der Erfindung sehen vor, dass die Spannvorrichtung durch ein in Verschieberichtung längserstrecktes Langloch hindurchgeführt ist. Das Langloch kann im Tragteil oder auch im Schlitten angeordnet sein. Die Spannvorrichtung ist dann günstigerweise jeweils am anderen der genannten Teile zumindest bezüglich der Verschieberichtung fix angeordnet.

Besonders bevorzugte Ausgestaltungsformen der Erfindung sehen vor, dass die Spannvorrichtung zumindest einen Befestigungsbolzen aufweist, welcher durch das Langloch hindurchgeführt ist. Als Spannmittel bzw. Mittel zum Einstellen der Spannung können im Falle eines Befestigungsbolzens z.B. Schrauben oder Muttern vorgesehen sein, die auf oder in den Befestigungsbolzen eingeschraubt werden können. Durch Drehen dieser Schrauben oder Muttern lässt sich dann auch die Spannung einstellen. Natürlich sind auch andere Spannmittel denkbar, wie z.B. Vorspannfedern oder dergleichen.

Zum Befestigungsbolzen ist darauf hinzuweisen, dass dessen Form bzw. Umfangsform verschiedenartig ausgestaltet sein kann. Sie kann rund sein, muss es aber nicht. Jedenfalls ist es günstig, wenn der Befestigungsbolzen längserstreckt ist. Die Längserstreckung des Befestigungsbolzens fällt günstigerweise mit der Spannrichtung der Spannvorrichtung im Bereich des Befestigungsbolzens zusammen. Es ist weiters günstig, wenn der Schlitten mittels der Spannvorrichtung in einer Spannrichtung orthogonal zur Verschieberichtung auf das Tragteil spannbar ist.

Es ist auch günstig, wenn die Spannvorrichtung durch ein bzw. das in Verschieberichtung längs erstrecktes bzw. erstreckte Langloch hindurchgeführt ist, wobei die Keilfläche direkt an einer das Langloch begrenzenden Wand angeordnet, vorzugsweise ausgebildet, ist. Günstig ist es jedenfalls, wenn die Keilfläche in einer Richtung parallel zu einer Spannrichtung, in der der Schlitten mittels der Spannvorrichtung im Bereich der Keilfläche auf das Tragteil gespannt ist, ansteigt oder abfällt.

Solche Keilflächen können aber auch direkt zwischen Schlitten und Tragteil wirken. In diesem Sinne können erfindungsgemäße Ausführungsbeispiele realisiert werden, indem ein Vorsprungelement an der Keilfläche anliegt bzw. im Crashfall in Verschieberichtung an der Keilfläche entlanggleitet, wobei die Keilfläche zumindest bezüglich der Verschieberichtung an einem Bauteil, welches aus einer Gruppe bestehend aus dem Schlitten und dem Tragteil und der Spannvorrichtung ausgewählt ist, fixiert ist und das Vorsprungelement zumindest bezüglich der Verschieberichtung an einem anderen der Bauteile aus dieser Gruppe fixiert ist. Günstig ist es dabei, wenn die Längserstreckung des Vorsprungelements in Verschieberichtung kürzer als der maximal mögliche Verschiebeweg in Verschieberichtung ist. Der Verschiebeweg kann in Ausgestaltungsformen mit einem Langloch durch dessen Begrenzung bzw. Längsanschläge vorgegeben werden.

Eine einfache Art der Realisierung der Wegabhängigkeit der Energieaufzehrung im Crashfall ist aber auch möglich, indem man die Länge der Anlagestellen in Verschieberichtung entsprechend begrenzt. So ist es einerseits möglich, die Anlagestellen in Verschieberichtung über den gesamt maximal möglichen Verschiebeweg auszubilden. Alternativ ist es aber auch möglich, die Anlagestellen, in Verschieberichtung gesehen, kürzer als den maximal möglichen Verschiebeweg auszubilden, wodurch es auch zu einer Wegabhängigkeit der Energieaufzehrung im Crashfall kommt.

Der Vollständigkeit halber wird noch darauf hingewiesen, dass die Lenkspindel günstigerweise um ihre Lenkspindellängsachse drehbar in einer Lenkspindellagereinheit gelagert ist. Bei der Lenkspindellagereinheit kann es sich direkt um den Schlitten handeln. Es ist aber auch möglich, dass die Lenkspindellagereinheit unter Zwischenschaltung des Schlittens an dem Tragteil, vorzugsweise verstellbar, befestigt ist.

Insbesondere kann die Lenksäule derart ausgebildet sein, dass die Lenksäule eine Feststelleinrichtung aufweist, die wahlweise zwischen einer geöffneten und einem geschlossenen Zustand wechselseitig verstellbar ist, wobei in dem geöffneten Zustand der Schlitten gegenüber dem Tragteil in Richtung der Lenkspindellängsachse verschiebbar und/oder das Tragteil gegenüber einem Halteteil, das zur Befestigung der Lenksäule an einer Karosserie des Kraftfahrzeuges ausgebildet ist, um eine Schwenkachse verschwenkbar ist, und wobei in dem geschlossenen Zustand der Schlitten gegenüber dem Tragteil und gegenüber dem Halteteil fixiert ist, für den Fall, dass eine auf die Lenkspindel der Lenksäule in Lenkspindellängsachse einwirkende Kraft (F) einen vorgebbaren Wert nicht überschreitet.

Weitere Merkmale und Einzelheiten möglicher Ausgestaltungsformen der Erfindung werden anhand verschiedener erfindungsgemäßer Varianten in den Figuren gezeigt und nachfolgend beschrieben. Es zeigen:
Fig. 1 und 2 schematisiert eine erste erfindungsgemäße Variante in Form einer nicht verstellbaren Lenksäule;
Fig. 3 eine erfindungsgemäße, nur in Längsrichtung verstellbare Lenksäule und
Fig. 4 eine in Längs- und Höhenrichtung verstellbare Lenksäule in erfindungsgemäßer Ausgestaltungsform;
Fig. 5 den Schnitt entlang der Schnittlinien AA aus Fig. 2 und 3;
Fig. 6 und 7 verschiedene Ausgestaltungsformen in Ansichten auf das Tragteil ohne Schlitten;
Fig. 8 und 9 verschiedene Ausgestaltungsformen von Schnitten entlang der Schnittlinie BB aus Fig. 5;
Fig. 10 eine mögliche Ausgestaltungsform eines Schnittes entlang der Schnittlinie CC aus Fig. 5;
Fig. 11 und 12 Darstellungen zu einem weiteren Ausführungsbeispiel, wobei Fig. 12 ein Schnitt entlang der Schnittlinie DD und Fig. 11 ein Schnitt entlang der Schnittlinie EE zeigt.

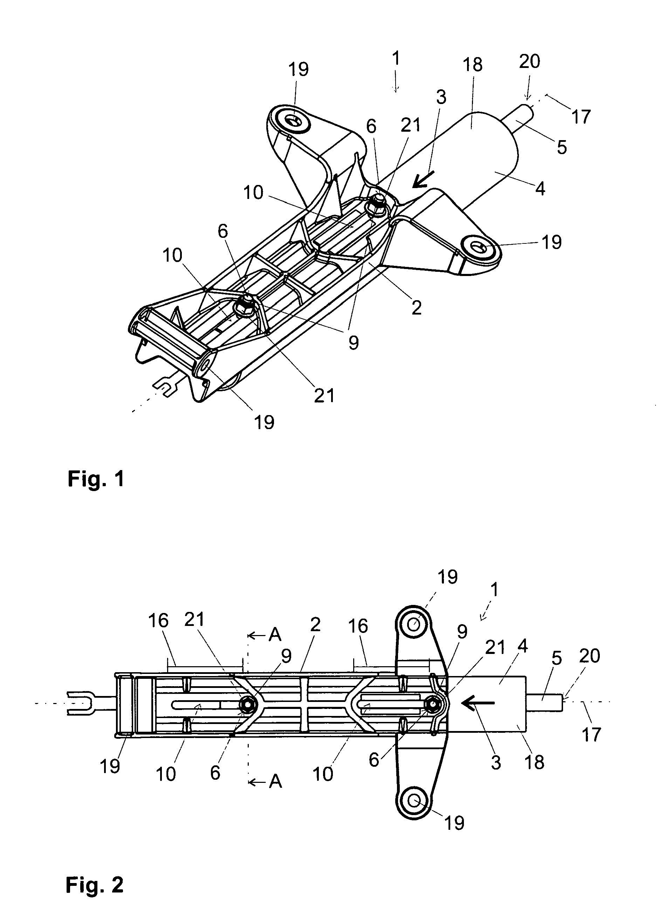

In Fig. 1 und 2 sind zunächst vereinfachte Darstellungen einer erfindungsgemäßen Lenksäule 1 gezeigt, bei der im Normalbetrieb, also im Nicht- Crashfall die Lenkspindel 5 mit ihrem Lenkradanschluss 20 nicht relativ zur Karosserie und damit auch nicht relativ zum Tragteil 2 verstellbar ist. Das Tragteil 2 dient der Befestigung der Lenksäule an der hier nicht dargestellten Karosserie des Fahrzeugs. Im gezeigten Ausführungsbeispiel weist das Tragteil 2 hierzu die Befestigungslaschen 19 auf. Der über die Spannvorrichtungen 6 an das Tragteil 2 gespannte Schlitten 4 ist in diesem ersten Ausführungsbeispiel gleichzeitig die Lenkspindellagereinheit 18. In dieser Lenkspindellagereinheit 18 bzw. im Schlitten 4 ist die Lenkspindel 5 um ihre Längsachse 17 drehbar gelagert. Das am Lenkradanschluss 20 befestigbare Lenkrad ist in den Fig. 1 und 2 nicht dargestellt.

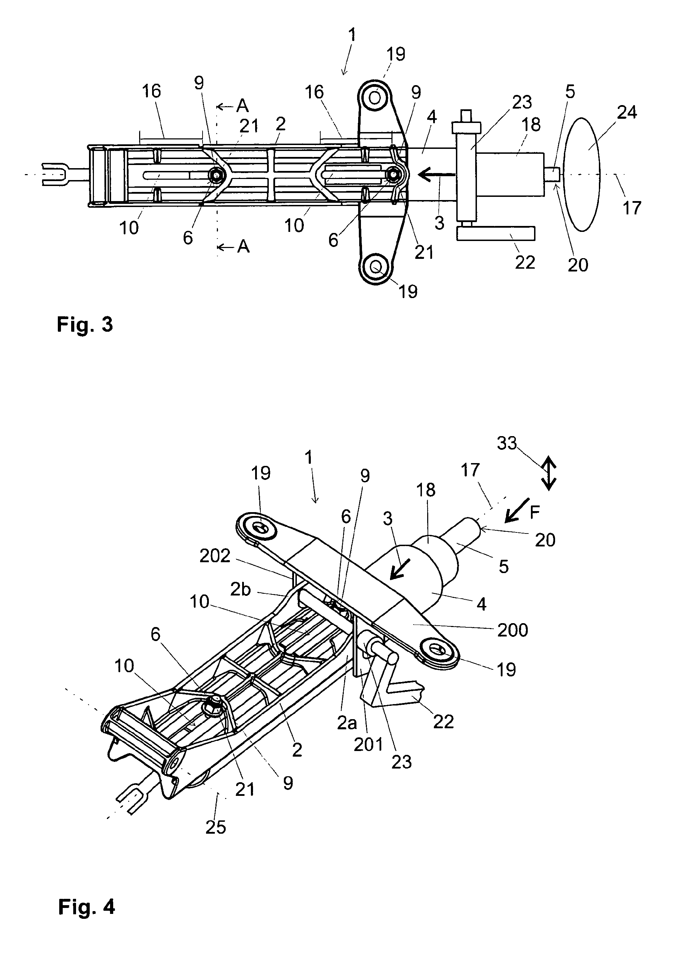

Grundsätzlich ist darauf hinzuweisen, dass erfindungsgemäß zumindest eine Spannvorrichtung 6 vorgesehen ist. Es können aber auch mehrere Spannvorrichtungen 6 zum Einsatz kommen, um den Schlitten 4 am Tragteil 2 festzuspannen bzw. zu befestigen. In den gezeigten Ausführungsbeispielen sind es jeweils zwei Spannvorrichtungen 6, was als bevorzugte Ausführung anzusehen ist. Diese weisen jeweils einen Befestigungsbolzen 9 auf. In den gezeigten Ausführungsbeispielen sind die Befestigungsbolzen 9 und damit auch die Spannvorrichtungen 6 bezüglich der Verschieberichtung 3 fix am Schlitten 4 angeordnet. Die Spannvorrichtungen 6 bzw. Befestigungsbolzen 9 durchdringen Langlöcher 10 der jeweiligen Tragteile 2. Mittels der Spannmuttern 21 können die Spannkräfte der Spannvorrichtungen 6 eingestellt werden, indem die Spannmuttern 21 auf entsprechenden Gewinden der Befestigungsbolzen 9 verdreht werden. Im Crashfall wird die Lenkspindel 5 samt Lenkrad und Schlitten 4 in Verschieberichtung 3 relativ zum karosseriefesten Tragteil 2 verschoben. Die Länge der Langlöcher 10 gibt in den gezeigten Ausführungsbeispielen den maximal möglichen Verschiebeweg 16 vor. Die Art der Befestigung bzw. Verspannung des Schlittens 4 am Tragteil 2 ist in allen Ausführungsbeispielen gemäß der Fig. 1 bis 4 dieselbe, sodass diese nachfolgend nur einmal erläutert werden muss. Vorab sei aber darauf hingewiesen, dass in dem Ausführungsbeispiel gemäß Fig. 3 das dort dargestellte Lenkrad 24 zusammen mit der Lenkspindel 5 und der Lenkspindellagereinheit 18 zur Einstellung der Position des Lenkrades relativ zum Schlitten 4 und damit auch zum Tragteil 2 und zur (nicht dargestellten) Karosserie des Fahrzeugs verstellbar ist. Hierzu sind in dem Ausführungsbeispiel gemäß Fig. 3 der Schlitten 4 und die Lenkspindellagereinheit 18 voneinander getrennte Bauteile, die ineinander teleskopierbar gelagert sind. Mittels einer an sich bekannten Feststelleinrichtung 23 ist eine Verstellung der Lenkspindellagereinheit 18 samt Lenkspindel 5 und Lenkrad 24 relativ zum Schlitten 4 möglich, wenn die Feststelleinrichtung 23 sich im geöffneten Zustand befindet. Im geschlossenen Zustand der Feststelleinrichtung 23 ist die Position der Lenkspindellagereinheit 18 und damit auch der Lenkspindel 5 relativ zum Schlitten 4 fixiert. Die Feststelleinrichtung 23 wird, wie an sich bekannt, durch den hier schematisiert dargestellten Stellhebel 22 zwischen ihrem geöffneten Zustand und ihrem Schließzustand verstellt. Natürlich kann statt eines von Hand bedienbaren Stellhebels 22 auch ein motorischer Verstellmechanismus für die Feststelleinrichtung 23 vorgesehen sein. Die Längsverstellung des Lenkrades 24, der Lenkspindel 20 und der Lenkspindellagereinheit 18 relativ zum Schlitten 4 erfolgt in Richtung der Verschieberichtung 3 und in deren Gegenrichtung. Im Crashfall wird der Schlitten 4 zusammen mit der Feststelleinrichtung 23 der Lenkspindellagereinheit 18 der Lenkspindel 5 und dem Lenkrad 24 in gleicher Weise wie beim ersten Ausführungsbeispiel in Verschieberichtung 3 relativ zum Tragteil 2 verschoben. Dies ist unabhängig von der in diesem Ausführungsbeispiel hinzugefügten Verstellbarkeit der Lenksäule 1 in Längsrichtung der Lenkspindel 5.

In Fig. 4 ist schematisiert noch ein Ausführungsbeispiel gezeigt, in dem zusätzlich zur Längsverstellung auch noch die Möglichkeit einer Höheneinstellung der Lenkspindel 5 bzw. des hier nicht gezeigten Lenkrades 24 möglich ist. Auch in diesem Ausführungsbeispiel gemäß Fig. 4 sind Schlitten 4 und Lenkspindellagereinheit 18 zwei verschiedene Bauteile, welche teleskopierbar ineinander gelagert sind. Die Längsverstellung in Richtung parallel zur Verschieberichtung 3 erfolgt, wie in Fig. 3 erläutert, bei entsprechend geöffneter Feststelleinrichtung 23. Zur Darstellung der Höhenverstellung ist das Tragteil 2 in bekannter Weise um eine Schwenkachse 25 in einem Halteteil 200 gelagert. Zur Ausbildung der Schwenkachse 25 ist das Tragteil 2 drehbar an nicht dargestellten Befestigungspunkten an der Karosserie gehalten. Zwischen den Seitenwangen 201, 202 des Halteteils können die beiden Seitenflächen 2a und 2b des Tragteils mit der Feststelleinrichtung 23 fixiert, insbesondere verspannt werden. Die Höhenverstellung in den Richtungen 33 erfolgt durch Schwenken des Tragteils 2 samt Schlitten 4 samt Lenkspindellagereinheit 18 und Lenkspindel 5 um die Schwenkachse 25. Der Vollständigkeit halber sei darauf hingewiesen, dass, wie beim Stand der Technik bekannt, diese Möglichkeit der Höheneinstellung in Richtung 33 auch nur dann möglich ist, wenn die Feststelleinrichtung 23 mittels des Stellhebels in den geöffneten Zustand gebracht ist. In dieser einfachen Konstruktion ist es möglich, das Tragteil 2 als ein einziges Bauteil, bevorzugt aus einem Aluminiumguss oder Magnesiumguss, darzustellen und dennoch die vielfältigen Funktionen von Crash und Verstellung bei einer hohen Steifigkeit der Lenksäule 1 zu integrieren.

Auch in diesem dritten Ausführungsbeispiel gemäß Fig. 4 ist die Befestigung des Schlittens 4 mittels Spanneinrichtung 6 und der im nachfolgenden erläuterten Anlagestellen 7 wie in allen vorab geschilderten Ausführungsbeispielen realisiert. Dies wird nun im Folgenden anhand des Schnittes AA aus den Fig. 2 und 3 in einem ersten Ausführungsbeispiel erläutert. Gezeigt ist somit jeweils ein Schnitt im Bereich der vorderen Spannvorrichtung 6. Der Aufbau im Bereich der dem Lenkrad zugewandten Spannvorrichtung 6 ist im Wesentlichen derselbe, sodass er hier nicht noch einmal gesondert dargestellt ist.

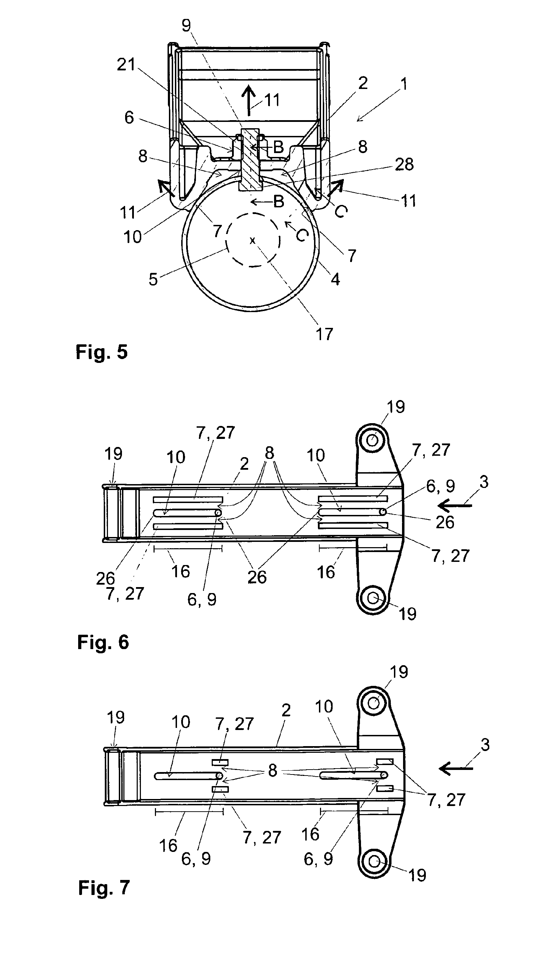

Fig. 5 zeigt nun den erwähnten Schnitt AA aus Fig. 2 und 3. Die Schnittebene steht normal auf der Lenkspindellängsachse 17. Die Lenkspindel 5 ist im Schlitten 4 gestrichelt dargestellt. In Fig. 5 ist nun zu sehen, wie der Schlitten erfindungsgemäß mittels der Spannvorrichtung 6 auf das Tragteil 2 gespannt ist, wobei der Schlitten 4 zusätzlich noch an zumindest zwei, aufeinander gegenüberliegenden Seiten der Spannvorrichtung 6 und distanziert zur Spannvorrichtung 6 angeordneten Anlegestellen 7 am Tragteil 2 abgestützt ist. In den Bereichen zwischen der Spannvorrichtung 6 und den Anlagestellen 7 befindet sich jeweils ein Freiraum 8 zwischen dem Schlitten 4 und dem Tragteil 2. In der gezeigten Schnittebene handelt es sich somit um eine Art Dreipunktbefestigung des Schlittens 4 am Tragteil 2. Zum einen liegt der Schlitten 4 an den beiden distanziert von der Spannvorrichtung 6 angeordneten Anlagestellen 7 an. Zum anderen wird der Schlitten 4 mittels der Spannvorrichtung 6 in Spannrichtungen 11 auf das Tragteil 2 gespannt. Die Freiräume 8, in denen der Schlitten 4 nicht am Tragteil 2 anliegt, erlauben es durch entsprechende Verstellung der Spannvorrichtung 6 die gewünschte Anpresskraft bzw. Spannung, mit der der Schlitten 4 auf das Tragteil 2 gespannt ist, einzustellen. Durch die Freiräume 8 ist es möglich, den Schlitten 4 und gegebenenfalls auch das Tragteil 2 durch das Spannen in einem gewissen Umfang elastisch oder gegebenenfalls auch plastisch zu verformen, um die benötigten Andrückkräfte aufzubringen. Durch die Freiräume 8 steht jedenfalls ein relativ großer Einstellbereich zur Verfügung, sodass relativ geringe Anforderungen an die Herstellungsgenauigkeit des Schlittens 4 und des Tragteils 2 zu stellen sind. In dem, in Fig. 5 gezeigten Ausführungsbeispiel sind die Anlagestellen 7 in Umfangsrichtung des rohrförmig ausgebildeten Schlittens 4 von der Spannvorrichtung 6 distanziert. Diese Umfangsrichtung steht einerseits orthogonal auf den Spannrichtungen 11 und andererseits aber auch orthogonal auf der Verschieberichtung 3.

Im gezeigten Ausführungsbeispiel weist die Spannvorrichtung 6 einen Befestigungsbolzen 9 auf, der mittels seines Kopfes 28 im Schlitten 4 abgestützt und befestigt ist. Weiters weist die gezeigte Spannvorrichtung 6 eine Spannmutter 21 auf, welche sich am Tragteil 2 abstützt, womit der Befestigungsbolzen 9 samt Schlitten 4 gegen das Tragteil 2 verspannt werden kann, indem man die Spannmutter 21 entsprechend weit auf den Befestigungsbolzen 9 aufschraubt. Der Befestigungsbolzen 9 und damit die Spannvorrichtung 6 sind bezüglich der Verschieberichtung 3 fix am Schlitten 4 angeordnet. Innerhalb des maximal möglichen Verstellweges 16, also entlang der Länge der Langlöcher 10 ist die Spannvorrichtung 6 samt Schlitten 4 relativ zum Tragteil 2 verschiebbar. Die Anschläge 26, also die in Verschieberichtung 3 gesehenen Enden der Langlöcher 10, begrenzen in den gezeigten Ausführungsbeispielen den maximal möglichen Verschiebeweg 16.

Der Vollständigkeit halber wird darauf hingewiesen, dass nicht zwingend vorgesehen sein muss, dass, wie hier realisiert, das Langloch 10 im Tragteil 2 und die in Verschieberichtung 3 fixe Befestigung der Spannvorrichtung 6 am Schlitten 4 realisiert wird. Erfindungsgemäß ist es genauso gut möglich, das Langloch 10 im Schlitten 4 vorzusehen und die Spannvorrichtung 6 entsprechend bezüglich der Verschieberichtung 3 fix am Tragteil 2 anzuordnen. Da in diesem Fall allerdings die Steifigkeit des Schlittens 4 reduziert wird, ist dieser Fall nicht zu bevorzugen. Im Fall des Tragteils 2, können Steifigkeitseinbußen durch die eingebrachten Langlöcher einfacher durch ein entsprechendes Design ausgeglichen werden als dies im Schlitten 4 möglich ist.

In den Fig. 6 und 7 sind nur beispielhaft verschiedene Möglichkeiten dargestellt, wie man die Stege 27 zur Ausbildung der Anlagestellen 7, welche in Umfangsrichtung des Schlittens 4 gesehen von der Spannvorrichtung 6 distanziert sind, ausgestalten kann. In den Fig. 6 und 7 ist der Schlitten 4 nicht dargestellt, sodass man auf die entsprechende Innenseite des Tragteils 2 sieht. Die Anlagestellen 7 sind in beiden Darstellungen 6 und 7 jeweils als Stege 27 am Tragteil 2 ausgebildet. Diese Stege 27 überragen in Richtung hin zum Schlitten 4 die danebenliegenden Bereiche des Tragteils 2, sodass die erwähnten Freiräume 8 ausgebildet werden, wenn der Schlitten 4, wie in Fig. 5 gezeigt, am Tragteil 2 befestigt ist. In Fig. 6 sind die, die Anlagestellen 7 bildenden Stege 27 in Verschieberichtung 3 entlang des gesamten maximalen Verschiebeweges 16 erstreckt. In Fig. 7 ist diese Längserstreckung der Stege 27 und damit der Anlagestellen 7 in Verschieberichtung 3 gegenüber dem maximal möglichen Verschiebeweg 16 verkürzt ausgebildet. Hierdurch wird bereits eine gewisse Beeinflussung bzw. Wegabhängigkeit der Energieaufzehrung im Crashfall, in dem der Schlitten 4 samt Spannvorrichtungen 6 in Verschieberichtung 3 relativ zum Tragteil 2 verschoben wird, erreicht. Der Vollständigkeit halber wird darauf hingewiesen, dass die entsprechenden Anlagestellen 7 natürlich auch durch entsprechend über die Außenkontur des Schlittens 4 vorspringende Stege 27 am Schlitten 4 realisiert werden können. In Fig. 6 und 7 ist auch gut zu sehen, dass vorgesehen sein kann, dass die Anlagestellen 7 in der Verschieberichtung 3 längs erstreckt sind und/oder dass die Anlagestellen 7 in der Verschieberichtung 3 distanziert voneinander und/oder hintereinander angeordnet sind.

Um eine gezielte Wegabhängigkeit der Energieaufzehrung entlang des Verschiebeweges in Verschieberichtung 3 zu erreichen, können die eingangs bereits erwähnten Keilflächen 12 an verschiedenen Stellen realisiert werden. Allen nachfolgend beschriebenen Varianten ist gemeinsam, dass die Keilflächen 12 entlang der Verschieberichtung 3 ansteigen oder abfallen. Die Steigungswinkel 34 sind dabei allerdings relativ gering und liegen bevorzugt im Bereich zwischen 1 ° und 5°, vorzugsweise zwischen 1 ° und 3°. Die über die Keilflächen 12 realisierten Gesamthübe 35 liegen günstigerweise im Bereich von maximal 1 mm bis 5mm, vorzugsweise 1 mm bis 3mm.

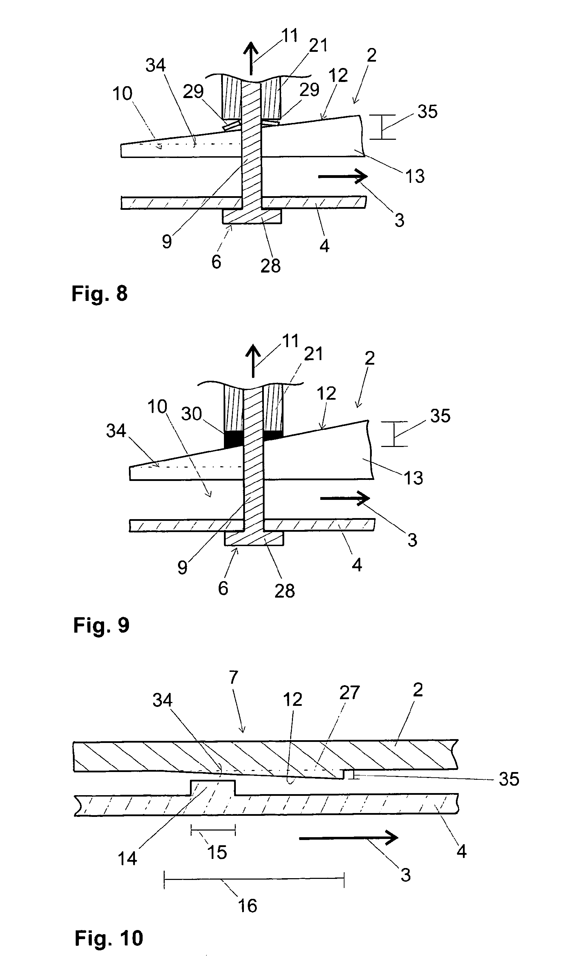

Um die Keilflächen 12 besser darstellen zu können, sind sie in den Fig. 8 bis 10 und 12 überhöht dargestellt.

Die Fig. 8 und 9 zeigen schematisiert eine erste Möglichkeit der Ausgestaltung solcher Keilflächen 12. Gezeigt sind jeweils schematisiert und überhöht dargestellte Schnitte entlang der Schnittlinie BB aus Fig. 5. In diesen Ausgestaltungsformen ist vorgesehen, dass die Spannvorrichtung 6 durch das in Verschieberichtung 3 längserstreckte Langloch 10 hindurchgeführt ist und die Keilflächen 12 direkt an zumindest einer, vorzugsweise beiden, das Langloch 10 begrenzenden Wänden 13 angeordnet, vorzugsweise ausgebildet, ist. Diese Wände 13 verlaufen günstigerweise parallel zur Verschieberichtung 3, was dann entsprechend auch für die Keilflächen 12 gilt. In Fig. 8 ist gut zu sehen, wie der Befestigungsbolzen 9 der Spannvorrichtung 6 bezüglich der Verschieberichtung 3 am Schlitten 4 fixiert ist. Am Tragteil 2 ist der Befestigungsbolzen 9 und damit die Spannvorrichtung 6 durch das Langloch 10 im Tragteil 2 hindurchgeführt. Die Spannmutter 21 der Spannvorrichtung 6 ist unter Zwischenschaltung eines Sprengrings 29 in Fig. 8 und unter Zwischenschaltung eines keilförmigen Zwischenteils 30 in Fig. 9 auf der Keilfläche 12 der das Langloch 10 begrenzenden Wand 13 abgestützt. Im Crashfall wird durch Verschieben des Schlittens 4 in Verschieberichtung 3 die Spannvorrichtung 6 zwangsweise in Verschieberichtung 3 mit verschoben. Durch die Keilfläche 12 nehmen die dieser Verschiebebewegung entgegengesetzten Kräfte in Richtung der Verschieberichtung 3 zu, wodurch die gewünschte Wegabhängigkeit der Energieaufzehrung im Crashfall realisiert wird. Natürlich können der Neigungswinkel 34 und die Einfallrichtung der Keilfläche 12 auch anders ausgebildet werden, sodass andere Arten der Wegabhängigkeit der Energieaufzehrung realisierbar sind. Vereinfacht gesprochen, kann durch eine entsprechende Variierung der Dicke der das Langloch begrenzenden Wände 13 die gewünschte Wegabhängigkeit realisiert werden.

In Fig. 10 ist nun beispielhaft gezeigt, dass solche Keilflächen 12 nicht nur im Bereich der Langlöcher 10, sondern auch im Bereich der Anlagestellen 7 realisiert werden können. Fig. 10 zeigt den Schnitt entlang der Schnittlinie CC aus Fig. 5 in Verschieberichtung 3. In diesem Ausführungsbeispiel ist eine entsprechende Keilfläche 12 an dem Tragteil 2 bzw. dessen, die Anlagestelle bildenden Steg 27 realisiert. Die Keilfläche 12 wirkt mit einem Vorsprungelement 14, welches am Schlitten 4 ausgebildet bzw. angeordnet ist, zusammen. Die Längserstreckung 15 des Vorsprungelementes 14 in Verschieberichtung 3 ist kürzer als der maximal mögliche Verschiebeweg 16. Auch durch eine solche Ausgestaltungsform ist eine Wegabhängigkeit der Energieaufzehrung im Crashfall darstellbar. Natürlich kann sich in umgekehrter Ausgestaltungsform die Keilfläche 12 natürlich auch am Schlitten 4 und das Vorsprungelement 14 am Tragteil 2 bzw. am Steg 27 befinden.

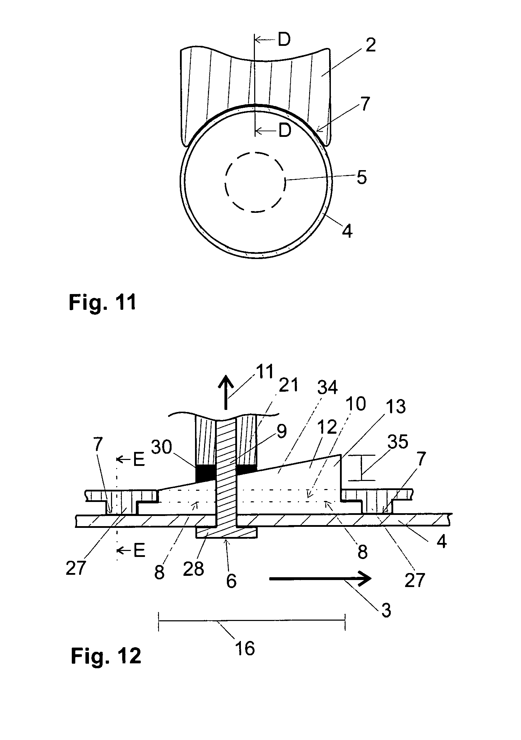

Während in den bisher beschriebenen Ausführungsbeispielen die Anlagestellen 7 in Umfangsrichtung des Schlittens 4 von der Spannvorrichtung 6 distanziert sind, zeigen die Fig. 11 und 12 schematisiert Darstellungen zu einem Ausführungsbeispiel, bei dem die Anlagestellen 7 in Verschieberichtung 3 von der Spannvorrichtung 6 beabstandet sind, um die Freiräume 8 zwischen dem Schlitten 4 und dem Tragteil 2 in den Bereichen zwischen der Spannvorrichtung 6 und den Anlagestellen 7 zu realisieren. Fig. 11 zeigt den Schnitt EE aus Fig. 12, die Schnittlinie DD aus Fig. 11 zeigt wiederum die Schnittebene, welche in Fig. 12 dargestellt ist. Der Schnitt gemäß Fig. 11 ist im Bereich einer Anlagestelle 7 gezeichnet. Die dort realisierte Schnittebene steht normal auf der Lenkspindellängsachse 17. Es ist gut zu sehen, wie der Schlitten 4 im Bereich der Anlagestelle 7 vollflächig am Tragteil 2 anliegt. In Fig. 12 und damit in dem Schnitt parallel zur Verschieberichtung 3 ist die Spannvorrichtung 6 zu sehen, wie sie distanziert von den beiden Anlagestellen 7 angeordnet ist. Auch hier ist die Spannvorrichtung 6 in einem Langloch 10 im Tragteil 2 in Verschieberichtung 3 entlang des maximal möglichen Verschiebeweges 16 verschiebbar, wenn es zu einem entsprechenden Crash kommt. Ähnlich wie in Fig. 8 und 9 ist zur Beeinflussung der Wegabhängigkeit der Energieaufzehrung an den das Langloch 10 begrenzenden Wänden 13 des Tragteils 2 jeweils eine Keilfläche 12 angeordnet. Für die Winkel 34 und den realisierbaren Gesamthub 35 der Keilfläche 12 gilt das vorab Gesagte. Auch bei diesem Ausführungsbeispiel ist darauf hinzuweisen, dass die, die Anlagestellen 7 bildenden Stege 27 anstelle am Tragteil 2 auch fix am Schlitten 4 angeordnet sein könnten.

**Legende**

| | | | |
|---|---|---|---|
| zu den Hinweisziffern: | | | |
| 1 | Lenksäule | 18 | Lenkspindellagereinheit |
| 2 | Tragteil | 19 | Befestigungslasche |
| 2a | Seitenfläche | 20 | Lenkradanschluss |
| 2b | Seitenfläche | 21 | Spannmutter |
| 3 | Verschieberichtung | 22 | Stellhebel |
| 4 | Schlitten | 23 | Feststelleinrichtung |
| 5 | Lenkspindel | 24 | Lenkrad |
| 6 | Spannvorrichtung | 25 | Schwenkachse |
| 7 | Anlagestelle | 26 | Anschlag |
| 8 | Freiraum | 27 | Steg |
| 9 | Befestigungsbolzen | 28 | Kopf |
| 10 | Langloch | 29 | Sprengring |
| 11 | Spannrichtung | 30 | Zwischenteil |
| 12 | Keilfläche | 33 | Richtungen |
| 13 | Wand | 34 | Winkel |
| 14 | Vorsprungelement | 35 | Gesamthub |
| 15 | Längserstreckung | 200 | Halteteil |
| 16 | Verschiebeweg | 201 | Seitenwange |
| 17 | Lenkspindellängsachse | 202 | Seitenwange |

## Patentansprüche

1. Lenksäule (1) für ein Kraftfahrzeug mit einem Tragteil (2) zur direkten oder indirekten Befestigung der Lenksäule (1) an einer Karosserie des Kraftfahrzeugs und mit zumindest einem, zumindest in einem Crashfall in einer Verschieberichtung (3) verschiebbar am Tragteil (2) gelagerten Schlitten (4), wobei eine Lenkspindel (5) der Lenksäule (1) direkt oder indirekt drehbar am Schlitten (4) gelagert ist, und wobei der Schlitten (4) mittels zumindest einer Spannvorrichtung (6) der Lenksäule (1) auf das Tragteil (2) gespannt ist, wobei der Schlitten (4) zusätzlich noch an zumindest zwei, auf einander gegenüberliegenden Seiten der Spannvorrichtung (6) und distanziert zur Spannvorrichtung (6) angeordneten Anlagestellen (7) am Tragteil (2) abgestützt ist, wobei in Bereichen zwischen der Spannvorrichtung (6) und den Anlagestellen (7) jeweils zumindest ein Freiraum (8) zwischen dem Schlitten (4) und dem Tragteil (2) angeordnet ist, **dadurch gekennzeichnet, dass** die Lenksäule (1) zumindest eine, zwischen Schlitten (4) und Tragteil (2) oder zwischen Spannvorrichtung (6) und Tragteil (2) oder zwischen Spannvorrichtung (6) und Schlitten (4) angeordnete Keilfläche (12) aufweist, wobei die Keilfläche (12) entlang der Verschieberichtung (3) ansteigt oder abfällt.

2. Lenksäule (1) nach Anspruch 1, **dadurch gekennzeichnet, dass** die Spannvorrichtung (6) durch ein in Verschieberichtung (3) längs erstrecktes Langloch (10) hindurchgeführt ist und das Langloch (10) im Tragteil (2) oder im Schlitten (4) angeordnet ist und die Spannvorrichtung (6) am jeweils anderen der genannten Teile zumindest bezüglich der Verschieberichtung (3) fixiert ist.

3. Lenksäule (1) nach Anspruch 2, **dadurch gekennzeichnet, dass** die Spannvorrichtung (6) zumindest einen Befestigungsbolzen (9) aufweist, welcher durch das Langloch (10) hindurchgeführt ist.

4. Lenksäule (1) nach einem der Ansprüche 1 bis 3, **dadurch gekennzeichnet, dass** der Schlitten (4) mittels der Spannvorrichtung (6) in einer Spannrichtung (11) orthogonal zur Verschieberichtung (3) auf das Tragteil (2) spannbar ist.

5. Lenksäule (1) nach einem der Ansprüche 1 bis 4, **dadurch gekennzeichnet, dass** die Spannvorrichtung (6) durch ein bzw. das in Verschieberichtung (3) längs erstrecktes bzw. erstreckte Langloch (10) hindurchgeführt ist, wobei die Keilfläche (12) direkt an einer das Langloch (10) begrenzenden Wand (13) angeordnet, vorzugsweise ausgebildet, ist.

6. Lenksäule (1) nach einem der Ansprüche 1 bis 5, **dadurch gekennzeichnet, dass** die Keilfläche (12) in einer Richtung parallel zu einer Spannrichtung (11), in der der Schlitten (4) mittels der Spannvorrichtung (6) im Bereich der Keilfläche (12) auf das Tragteil (2) gespannt ist, ansteigt oder abfällt.

7. Lenksäule (1) nach einem der Ansprüche 1 bis 6, **dadurch gekennzeichnet, dass** ein Vorsprungelement (14) an der Keilfläche (12) anliegt bzw. im Crashfall in Verschieberichtung (3) an der Keilfläche (12) entlanggleitet, wobei die Keilfläche (12) zumindest bezüglich der Verschieberichtung (3) an einem Bauteil, welches aus einer Gruppe bestehend aus dem Schlitten (4) und dem Tragteil (2) und der Spannvorrichtung (6) ausgewählt ist, fixiert ist und das Vorsprungelement (14) zumindest bezüglich der Verschieberichtung (3) an einem anderen der Bauteile aus dieser Gruppe fixiert ist.

8. Lenksäule (1) nach einem der Ansprüche 1 bis 7, **dadurch gekennzeichnet, dass** die Anlagestellen (7) in Verschieberichtung (3) und/oder in einer Richtung orthogonal zur Verschieberichtung (3) von der Spannvorrichtung (6) distanziert sind.

9. Lenksäule (1) nach einem der Ansprüche 1 bis 8, **dadurch gekennzeichnet, dass** die Lenkspindel (5) um ihre Lenkspindellängsachse (17) drehbar in einer Lenkspindellagereinheit (18) gelagert ist und die Lenkspindellagereinheit (18) der Schlitten (4) ist oder unter Zwischenschaltung des Schlittens (4) an dem Tragteil (2), vorzugsweise verstellbar, befestigt ist.

10. Lenksäule (1) nach einem der vorhergehenden Ansprüche, **dadurch gekennzeichnet, dass** die Lenksäule eine Feststelleinrichtung (23) aufweist, die wahlweise zwischen einem geöffneten und einem geschlossenen Zustand wechselseitig verstellbar ist, wobei in dem geöffneten Zustand der Schlitten (4) gegenüber dem Tragteil (2) in Richtung der Lenkspindellängsachse (17) verschiebbar und/oder das Tragteil (2) gegenüber einem Halteteil (200), das zur Befestigung der Lenksäule (1) an einer Karosserie des Kraftfahrzeuges ausgebildet ist, um eine Schwenkachse (25) verschwenkbar ist, und wobei im geschlossenen Zustand der Schlitten (4) gegenüber dem Tragteil (2) und gegenüber dem Halteteil (200) fixiert ist, für den Fall, dass eine auf die Lenkspindel (5) der Lenksäule (1) in Lenkspindellängsachse (17) einwirkende Kraft (F) einen vorgebbaren Wert nicht überschreitet.

11. Lenksäule (1) nach einem der Ansprüche 1 bis 10, **dadurch gekennzeichnet, dass** die Anlagestellen (7) in der Verschieberichtung (3) längs erstreckt sind.

12. Lenksäule (1) nach einem der Ansprüche 1 bis 11, **dadurch gekennzeichnet, dass** die Anlagestellen (7) in der Verschieberichtung (3) distanziert voneinander und/oder hintereinander angeordnet sind.

13. Lenksäule (1) nach einem der Ansprüche 1 bis 12, **dadurch gekennzeichnet, dass** die Anlagestellen (7) in Verschieberichtung (3) über den gesamt maximal möglichen Verschiebeweg (16) ausgebildet sind.

14. Lenksäule (1) nach einem der Ansprüche 1 bis 13, **dadurch gekennzeichnet, dass** die Lenkspindel (5) samt eines daran befestigbaren Lenkrades und der Schlitten (4) im Crashfall in Verschieberichtung (3) relativ zum karosseriefesten Tragteil (2) verschiebbar sind.

## Claims

1. Steering column (1) for a motor vehicle with a support part (2) for direct or indirect fastening of the steering column (1) on a body of the motor vehicle and having at least one slide (4), which is mounted on the support part (2) in such a way that it can be displaced in a displacement direction (3), at least in the event of a crash, wherein a steering spindle (5) of the steering column (1) is supported directly or indirectly on the slide (4) in such a way as to be rotatable, and wherein the slide (4) is clamped onto the support part (2) by means of at least one clamping device (6) of the steering column (1), wherein the slide (4) is additionally supported on the support part (2) at at least two contact points (7) arranged on mutually opposite sides of the clamping device (6) and at a distance from the clamping device (6), wherein at least one free space (8) is in each case arranged between the slide (4) and the support part (2) in regions between the clamping device (6) and the contact points (7), **characterized in that** the steering column (1) has at least one wedge surface (12), which is arranged between the slide (4) and the support part (2) or between the clamping device (6) and the support part (2) or between the clamping device (6) and the slide (4), wherein the wedge surface (12) rises or falls along the displacement direction (3).

2. Steering column (1) according to Claim 1, **characterized in that** the clamping device (6) is passed through an elongate hole (10) extended longitudinally in the displacement direction (3), and the elongate hole (10) is arranged in the support part (2) or in the slide (4), and the clamping device (6) is fixed on the other of said parts in each case, at least in relation to the displacement direction (3).

3. Steering column (1) according to Claim 2, **characterized in that** the clamping device (6) has at least one fastening bolt (9), which is passed through the elongate hole (10).

4. Steering column (1) according to one of Claims 1 to 3, **characterized in that** the slide (4) can be clamped onto the support part (2) in a clamping direction (11) orthogonal to the displacement direction (3) by means of the clamping device (6).

5. Steering column (1) according to one of Claims 1 to 4, **characterized in that** the clamping device (6) is passed through an or the elongate hole (10) extended longitudinally in the displacement direction (3), wherein the wedge surface (12) is arranged, preferably formed, directly on a wall (13) bounding the elongate hole (10).

6. Steering column (1) according to one of Claims 1 to 5, **characterized in that** the wedge surface (12) rises or falls in a direction parallel to a clamping direction (11) in which the slide (4) is clamped onto the support part (2) by means of the clamping device (6) in the region of the wedge surface (12).

7. Steering column (1) according to one of Claims 1 to 6, **characterized in that** a projecting element (14) rests on the wedge surface (12) or slides along the wedge surface (12) in the displacement direction (3) in the event of a crash, wherein the wedge surface (12) is fixed on a component which is selected from a group consisting of the slide (4) and the support part (2) and the clamping device (6), at least in relation to the displacement direction (3), and the projecting element (14) is fixed on another of the components from this group, at least in relation to the displacement direction (3).

8. Steering column (1) according to one of Claims 1 to 7, **characterized in that** the contact points (7) are spaced apart from the clamping device (6) in the displacement direction (3) and/or in a direction orthogonal with respect to the displacement direction (3).

9. Steering column (1) according to one of Claims 1 to 8, **characterized in that** the steering spindle (5) is supported in a steering spindle bearing unit (18) in such a way that it can be rotated about its steering spindle longitudinal axis (17), and the steering spindle bearing unit (18) is the slide (4) or is fastened, preferably adjustably, on the support part (2), with the slide (4) in between.

10. Steering column (1) according to one of the preceding claims, **characterized in that** the steering column has a fixing device (23), which can optionally be moved alternately between an open and a closed state, wherein, in the open state, the slide (4) can be moved relative to the support part (2) in the direction of the steering spindle longitudinal axis (17), and/or the support part (2) can be pivoted about a pivoting axis (25) relative to a holding part (200), which is formed on a body of the motor vehicle for the purpose of fastening the steering column (1), and wherein, in the closed state, the slide (4) is fixed relative to the support part (2) and to the holding part (200), provided that a force (F) acting on the steering spindle (5) of the steering column (1) along the steering spindle longitudinal axis (17) does not exceed a predeterminable value.

11. Steering column (1) according to one of Claims 1 to 10, **characterized in that** the contact points (7) are extended longitudinally in the displacement direction (3).

12. Steering column (1) according to one of Claims 1 to 11, **characterized in that** the contact points (7) are arranged so as to be spaced apart and/or one behind the other in the displacement direction (3).

13. Steering column (1) according to one of Claims 1 to 12, **characterized in that** the contact points (7) are formed over the entire maximum possible displacement path (16) in the displacement direction (3).

14. Steering column (1) according to one of Claims 1 to 13, **characterized in that** the steering spindle (5) together with a steering wheel that can be fastened thereon and with the slide (4) can be displaced in the displacement direction (3) relative to the support part (2) fixed in relation to the body in the event of a crash.

## Revendications

1. Colonne de direction (1) pour un véhicule automobile comprenant une partie de support (2) pour la fixation directe ou indirecte de la colonne de direction (1) à une carrosserie du véhicule automobile, et comprenant au moins un chariot (4) supporté sur la partie de support (2) de manière déplaçable dans une direction de déplacement (3) au moins dans le cas d'une collision, un arbre de direction (5) de la colonne de direction (1) étant supporté de manière directement ou indirectement rotative sur le chariot (4), et le chariot (4) étant serré sur la partie de support (2) au moyen d'au moins un dispositif de serrage (6) de la colonne de direction (1), le chariot (4) étant en outre encore supporté sur la partie de support (2) sur au moins deux points d'appui (7) disposés sur des côtés mutuellement opposés du dispositif de serrage (6) et à distance du dispositif de serrage (6), à chaque fois au moins un espace libre (8) étant disposé entre le chariot (4) et la partie de support (2) dans des régions entre le dispositif de serrage (6) et les points d'appui (7), **caractérisée en ce que** la colonne de direction (1) présente au moins une surface de clavette (12) disposée entre le chariot (4) et la partie de support (2) ou entre le dispositif de serrage (6) et la partie de support (2) ou entre le dispositif de serrage (6) et le chariot (4), la surface de clavette (12) montant ou descendant le long de la direction de déplacement (3).

2. Colonne de direction (1) selon la revendication 1, **caractérisée en ce que** le dispositif de serrage (6) est guidé à travers un trou oblong (10) allongé dans la direction de déplacement (3) et le trou oblong (10) est disposé dans la partie de support (2) ou dans le chariot (4) et le dispositif de serrage (6) est fixé sur l'autre respective desdites parties au moins par rapport à la direction de déplacement (3).

3. Colonne de direction (1) selon la revendication 2, **caractérisée en ce que** le dispositif de serrage (6) présente au moins un boulon de fixation (9) qui est guidé à travers le trou oblong (10).

4. Colonne de direction (1) selon l'une quelconque des revendications 1 à 3, **caractérisée en ce que** le chariot (4) peut être serré sur la partie de support (2) au moyen du dispositif de serrage (6) dans une direction de serrage (11) perpendiculairement à la direction de déplacement (3).

5. Colonne de direction (1) selon l'une quelconque des revendications 1 à 4, **caractérisée en ce que** le dispositif de serrage (6) est guidé à travers un ou le trou oblong (10) allongé dans la direction de déplacement (3), la surface de clavette (12) étant disposée directement, de préférence étant réalisée directement, sur une paroi (13) limitant le trou oblong (10).

6. Colonne de direction (1) selon l'une quelconque des revendications 1 à 5, **caractérisée en ce que** la surface de clavette (12) monte ou descend dans une direction parallèle à une direction de serrage (11) dans laquelle le chariot (4) est serré sur la partie de support (2) au moyen du dispositif de serrage (6) dans la région de la surface de clavette (12).

7. Colonne de direction (1) selon l'une quelconque des revendications 1 à 6, **caractérisée en ce qu'**un élément formant saillie (14) s'applique contre la surface de clavette (12) ou, dans le cas d'une collision, glisse le long de la surface de clavette (12) dans la direction de déplacement (3), la surface de clavette (12) étant fixée au moins par rapport à la direction de déplacement (3) à un composant qui est sélectionné parmi un groupe constitué du chariot (4), de la partie de support (2) et du dispositif de serrage (6), et l'élément formant saillie (14) étant fixé au moins par rapport à la direction de déplacement (3) à un autre des composants appartenant à ce groupe.

8. Colonne de direction (1) selon l'une quelconque des revendications 1 à 7, **caractérisée en ce que** les points d'appui (7) sont espacés du dispositif de serrage (6) dans la direction de déplacement (3) et/ou dans une direction perpendiculaire à la direction de déplacement (3).

9. Colonne de direction (1) selon l'une quelconque des revendications 1 à 8, **caractérisée en ce que** l'arbre de direction (5) est supporté de manière à pouvoir tourner autour de son axe longitudinal d'arbre de direction (17) dans une unité de support d'arbre de direction (18) et l'unité de support d'arbre de direction (18) est le chariot (4) ou est fixée de préférence de manière déplaçable à la partie de support (2) par l'intermédiaire du chariot (4).

10. Colonne de direction (1) selon l'une quelconque des revendications précédentes, **caractérisée en ce que** la colonne de direction présente un dispositif de fixation (23) qui peut être déplacé en alternance de manière sélective entre un état ouvert et un état fermé, le chariot (4), dans l'état ouvert, pouvant être déplacé par rapport à la partie de support (2) dans la direction de l'axe longitudinal de l'arbre de direction (17) et/ou la partie de support (2) pouvant pivoter autour d'un axe de pivotement (25) par rapport à une partie de retenue (200), qui est réalisée pour la fixation de la colonne de direction (1) à une carrosserie du véhicule automobile, et dans l'état fermé, le chariot (4) étant fixé par rapport à la partie de support (2) et par rapport à la partie de retenue (200), au cas où une force (F) agissant sur l'arbre de direction (5) de la colonne de direction (1) dans l'axe longitudinal de la l'arbre de direction (17) ne dépasse pas une valeur prédéfinissable.

11. Colonne de direction (1) selon l'une quelconque des revendications 1 à 10, **caractérisée en ce que** les points d'appui (7) sont allongés dans la direction de déplacement (3).

12. Colonne de direction (1) selon l'une quelconque des revendications 1 à 11, **caractérisée en ce que** les points d'appui (7) sont disposés dans la direction de déplacement (3) de manière espacée les uns des autres et/ou les uns derrière les autres.

13. Colonne de direction (1) selon l'une quelconque des revendications 1 à 12, **caractérisée en ce que** les points d'appui (7) sont réalisés dans la direction de déplacement (3) sur toute la course de déplacement maximale possible (16).

14. Colonne de direction (1) selon l'une quelconque des revendications 1 à 13, **caractérisée en ce que** l'arbre de direction (5) ainsi qu'un volant pouvant être fixé sur celui-ci et le chariot (4) peuvent être déplacés en cas de collision dans la direction de déplacement (3) par rapport à la partie de support (2) fixée à la carrosserie.
